## Europäisches Patentamt

## European Patent Office

## Office européen des brevets

(11) Veröffentlichungsnummer: **0 341 410 B1**

# EUROPÄISCHE PATENTSCHRIFT

(45) Veröffentlichungstag der Patentschrift: **04.11.92**

(51) Int. Cl.⁵: **A47J 43/044**

(21) Anmeldenummer: **89105377.9**

(22) Anmeldetag: **25.03.89**

(54) **Handrührgerät zum Bearbeiten von Nahrungsmitteln.**

(30) Priorität: **04.05.88 DE 3815177**

(43) Veröffentlichungstag der Anmeldung:
**15.11.89 Patentblatt 89/46**

(45) Bekanntmachung des Hinweises auf die
Patenterteilung:
**04.11.92 Patentblatt 92/45**

(84) Benannte Vertragsstaaten:
**AT CH DE ES FR GB IT LI NL SE**

(56) Entgegenhaltungen:
**DE-A- 3 446 911       DE-U- 8 232 415**
**DE-U- 8 535 646       DE-U- 8 613 192**
**FR-A- 1 282 717       GB-A- 2 169 216**

(73) Patentinhaber: **Braun Aktiengesellschaft**
**Rüsselsheimer Strasse 22**
**W-6000 Frankturt/Main(DE)**

(72) Erfinder: **Kamprath, Karl-Heinz**
**Eifelstrasse 1**
**W-6200 Wiesbaden(DE)**

## Beschreibung

Elektrisch betriebenes Handrührgerät zum Bearbeiten von Lebensmitteln, mit einem einen Motor, ein Getriebe und eine mit dem Getriebe verbundene Aufnahmeeinrichtung zur Befestigung von Arbeitswerkzeugen aufnehmendes Gehäuse, das zum Halten des Handrührgerätes und zur Kühlung des Motors einen Handgriff mit Luftleitkanälen und Luftöffnungen aufweist, durch die die Kühlluft von außen zum Gehäuse hin- oder vom Gehäuse weggeführt wird, wobei der Motor, das Getriebe und das Arbeitswerkzeug in Längsrichtung des Gehäuses hintereinander angeordnet sind, wobei Motor und Arbeitswerkzeug in gleicher Längsrichtung verlaufen, wobei der Handgriff quer zur Längsachse des Gehäuses verläuft und wobei der Handgriff an dem dem Arbeitswerkzeug entgegengesetzten, oberen Bereich des Gehäuses ausgebildet ist.

Ein derartiges Handrührgerät zum Bearbeiten von Lebensmitteln ist bereits aus der DE-PS 1 173 981 bekannt. Zur Kühlung des Motors dient ein mit dem Motor verbundenes Lüfterrad, durch das Kühlluft von außen über einen im Handgriff ausgebildeten Luftleitkanal angesaugt und nach dem Kühlen des Antriebsmotores über einen zweiten, ebenfalls im Handgriff ausgebildeten Luftleitkanal wieder nach außen befördert wird. Der Ein- und Auslaß der Gebläseluft ist hier entfernt von den Arbeitswerkzeugen am Handgriff ausgebildet. Bei dieser Gebläseeinrichtung umströmt zunächst die Kühlluft den Motor von außen, wird dann umgelenkt und legt dann denselben Weg, aber nun durch das Innere des Antriebmotors und den zweiten Luftleitkanal des Handgriffs nach Außen zurück.

Diese Ausführungsform bedingt eine aufwendige Abschottung des Antriebsmotors, damit die Kühlluft nur in einer Richtung durch den Antriebsmotor gefördert wird und sich nicht mit der bereits vom Motor erwärmten Kühlluft vermischt. Die Abschottung des Motors durch im Gehäuse ausgebildete Trennwände führt zu einer aufwendigen Konstruktion, die verhältnismäßig teuer ist. Ein weiterer Nachteil dieses Handrührgerätes besteht noch darin, daß aufgrund der durch die verhältnismäßig langen Wege bedingten Reibungsverluste der Kühlwirkungsgrad des Antriebsmotors ungünstig ist. Dies kann dann nur durch höhere Kühlleistungen, also einen leistungsstärkeren Antriebsmotor ausgeglichen werden.

Aus der DE-34 47 741 A1 ist weiterhin ein elektrisch betriebenes Handrührgerät bekannt, bei dem der Handgriff zusätzlich als ein in einer Richtung wirkender Luftleitkanal ausgebildet ist. Dieser Luftleitkanal wird zum Motorgehäuse derart zurückgeführt, daß die Luftaustrittsschlitze neben den Lufteintrittsschlitzen am Motorgehäuse und in unmittelbarer Nähe der Arbeitswerkzeuge ausgebildet sind. Dies führt wird wiederum zu den bereits oben beschriebenen Nachteilen, wie zum Beispiel zu einer aufwendigen Abschottung des Luftleitkanals und zu einer Motorverschmutzung durch angesaugtes Mehl.

Weiterhin sind Handrührgeräte bekannt, die nicht nur zum Rühren, Kneten, Schlagen, sondern auch zum Zerkleinern von Nahrungsmitteln geeignet sind, wie dies beispielsweise auch bei dem Handrührgerät "Krups 3 Mix 4000" aus dem Prospekt "Das Aktuelle Programm '88 der Firma Robert Krups Stiftung & Co., Solingen, Seite 16 - 19) der Fall ist. Dieses Gerät weist einen am Motorgehäuse bzw. am Gerätekörper angesetzten Handgriff auf, der im wesentlichen in Längsrichtung des Motorgehäuses verläuft. Das Gerät ist auf der Unterseite des Gerätekörpers mit Einsatzöffnungen zum Einstecken der Knet- und Rühreinsätze versehen. Der Zerkleinerungsstab muß jedoch aufgrund der Getriebeanordnung auf der Rückseite des Gerätes angetrieben werden. Die Handhabung des Geräts ist in der für den Zerkleinerungsstab um 90° gekippten Stellung nicht ohne eine zusätzliche, ungünstige Stellung des Handgelenks oder des Arms möglich.

Auch ist bei diesem Handrührgerät die Anordnung von insgesamt zwei Einführungsstellen für die Arbeitswerkzeuge aufgrund unterschiedlich benötigter Drehzahlen überhaupt ungünstig, zumal sich die Einsatzstelle für den Zerkleinerungsstab im hinteren Luftschlitzbereich des Geräts befindet. Dies hat beim Abstellen des Gerätes auf der Abstellfläche den Nachteil, daß der Zerkleinerungsstab dann senkrecht nach oben weist und noch am Zerkleinerungsstab zurückgebliebene Nahrungsmittel in das Motorgehäuse eindringen können. Wird das Gerät hingelegt, so verschmutzt der Arbeitstisch. Auch hier besteht der Nachteil, daß die zur Kühlung erforderlichen Luftschlitze zu nah an den Arbeitswerkzeugen und somit auch zu nah an den zu bearbeitenden Nahrungsmitteln liegen, so daß die Nahrungsmittel den Geruch von den aus dem Gehäuse austretenden Motordünsten annehmen können. Ebenso ist eine Verschmutzung des Motors des Handrührgeräts durch unsaubere Kühlluft möglich.

Bei diesem Gerät ergibt sich weiterhin der Nachteil, daß aufgrund des senkrecht zu den Arbeitswerkzeugen verlaufenden Motorgehäuses und des Handgriffs diese die Einfüllöffnung des Behälters, in dem die Nahrungsmittel bearbeitet werden, zu stark verdecken, so daß die Sicht in den Behälter behindert ist.

Aus dem Prospekt Nr. 362100 r 5, der Firma Gottlob Widmann + Söhne KG, Schwenningen (Neckar) ist ein weiteres Handrührgerät bekannt, bei dem sämtliche Einsätze zum Rühren, Kneten, Zerkleinern, Schlagen, Emulgieren etc. von der gleichen Seite, nämlich der Unterseite des Gerätes angetrieben werden, wobei in einem mehr oder weniger zylinderförmigen Gehäuse der Antriebsmotor und das Getriebe - wobei letzteres unter anderem auch zur Aufnahme der Arbeitswerkzeuge dient - auf engem Raum hintereinander und im Betrieb des Handrührgerätes senkrecht übereinander angeordnet sind.

Zur Handhabung dieses Handrührgerätes ist ein sich ungefähr von der Mitte des Gehäuses im wesentlichen senkrecht zu dessen Längsachse radial nach außen erstreckender, länglicher Handgriff vorgesehen. Zwischen Motor und Getriebe, also in der Nähe des Arbeitswerkzeugs, sind am Gehäuse Luftschlitze zur Zu- bzw. Abführung von Kühlluft angeordnet.

Die Anordnung der Luftschlitze in der Nähe der Arbeitswerkzeuge, die sich somit auch in unmittelbarer Nähe der zu bearbeitenden Nahrungsmittel befinden, führt zu dem Nachteil, daß die beispielsweise während der Bearbeitung von Teig von den Arbeitswerk- zeugen aufgewirbelten Teilchen, wie Mehl, vom Gebläse des Motors über die Luftschlitze angesaugt werden und so den Motor verschmutzen. Diese Verschmutzung kann zu einem frühzeitigen Ausfall des Handrührgerätes führen.

Ein weiterer Nachteil besteht darin, daß bereits bei geringer Schräghaltung des Handrührgerätes oder bei besonders hohen Schüsseln der aus dem Gebläse des Handrührgerätes austretende Gebläseluftstrom in die Rührschüssel geleitet werden kann. Das in der Rührschüssel befindliche Mehl wird dadurch aufgewirbelt und kann über die Ansaugschlitze vom Gebläserad in das Gehäuse eingesaugt werden, was ebenfalls zu den bereits oben beschriebenen Nachteilen führen kann.

Weiterhin ist es bei diesem Gerät als weniger vorteilhaft anzusehen, daß aufgrund der Anordnung der Luftschlitze im Bereich der das Handrührgerät bedienenden Hand diese ständig von Kühlluft angeblasen wird, was für die Bedienungsperson auf Dauer unangenehm sein kann.

Aufgabe der Erfindung ist es daher, die bekannten Handrührgeräte so weiterzubilden, daß bei guter Handhabung und nach außen verschlossenem Motorgehäuse dennoch eine optimale Kühlung der Antriebseinheit bei geringer Antriebsleistung erreicht wird.

Diese Aufgabe wird erfindungsgemäß dadurch gelöst, daß an dem dem Arbeitswerkzeug näheren, unteren Bereich des Gehäuses ein sich ebenfalls in gleicher Richtung wie der Handgriff quer zur Längsachse des Gehäuses erstreckender Arm vorgesehen ist und daß der Arm zur Kühlung des Motors mit einem weiteren Luftleitkanal und einer am freien Ende ausgebildeten Luftöffnung versehen ist, in der Kühlluft vom Gehäuse weg- oder zum Gehäuse hingeführt wird.

Durch diese erfindungsgemäße Anordnung wird eine optimale Kühlung erreicht. Durch die Erfindung ist es möglich, die Luft von oben über den Handgriff in das Gehäuse einzuführen und am unteren Ende über den Arm wieder nach außen abzuführen. Hierdurch wird die Kühlluft nur in einer Richtung durch das Gehäuse geführt, wodurch aufwendige Rückführkanäle vermieden werden. Eine optimale Kühlung wird dadurch erreicht, daß die Kühlluft den Motor allseitig umströmt. Dadurch, daß der Motor, das Getriebe und das Arbeitswerkzeug in Längsrichtung des Gehäuses hintereinander angeordnet sind und gleichzeitig der Handgriff und der Arm quer zur Längsachse des Gehäuses verlaufen, wird die Kühlluft immer quer zu diesen im wesentlichen mit den Nahrungsmitteln in Berührung kommenden Teilen geführt. Durch die Zu- und/oder Abführung der Kühlluft radial nach außen, also weg vom Gerät bzw. radial von außen hin zum Gerät, wird weiterhin ein Aufwirbeln, beispielsweise von Mehl, durch die Kühlluft vermieden und gleichzeitig kann aufgewirbeltes Mehl, das beispielsweise auch beim Durchmischen entstehen kann, nicht vom Handrührgerät angesaugt werden.

Um eine einfache Herstellung der Luftschlitze zu gewährleisten, sind nach einer Weiterbildung der Erfindung das freie Ende des Handgriffs und des Arms über ein sich im wesentlichen parallel zur Längsachse des Gehäuses und des Arbeitswerkzeuges erstreckendes Ansatzelement miteinander verbunden und das Ansatzelement ist an dem auf der dem Gehäuse abgewandten Seite mit Luftschlitzen versehen. Dabei ist es besonders vorteilhaft, wenn die Luftschlitze den Luftstrom quer zur Richtung des Arbeitswerkzeuges und eventuell noch leicht nach oben gerichtet aus dem Handrührgerät herausführen, damit auch bei noch möglichen Schrägstellungen des Handrührgerätes immer sichergestellt ist, daß der Luftstrom nicht in den die Nahrungsmittel aufnehmenden Behälter einströmen, in den die Arbeitswerkzeuge hineinragen und die Nahrungsmittel bearbeitet werden. Das erfindungsgemäße Ansatzelement kann beispielsweise direkt am Handgriff und am Arm angeformt oder auch an diesen angeflanscht werden. Die Anbindung des Arms über das Ansatzelement an den Handgriff sorgt für eine einfache Herstellung des Gehäuses und ein besonders biegesteife, stabile Gehäuseanordnung.

Nach einer Weiterbildung der Erfindung hat dieses Ansatzelement weiterhin den Vorteil, daß, wenn der Schwerpunkt des Handrührgerätes etwa mittig auf das Ansatzelement fällt, dieses Ansatzelement gleichzeitig als Fuß zum Abstellen des Handrührgerätes dient. Dies hat weiterhin den Vorteil, daß bei kurzer Unterbrechung des Rührvorganges die Arbeitswerkzeuge nicht mit der Arbeitsplatte in Berührung kommen und diese nicht unnötig verschmutzen.

Nach einer Weiterbildung der Erfindung ist es vorteilhaft, daß der Handgriff schräg nach unten gerichtet ist. Durch den schräg am Gehäuse des Handrührgerätes angreifenden Handgriff wird eine bequeme Stellung des Handgelenks und des Ober- und Unterarms mit möglichst geringem Kraftaufwand ermöglicht. Die Haltekräfte werden also überwiegend von dem muskelstarken und ausdauernden Oberarm übernommen, während sich das Handgelenk in Längsrichtung des Unterarms am Gelenkanschlag abstützt und damit keine nennenswerten Haltekräfte am Handgelenk entstehen. Die Schrägstellung des Handgriffs zur Längsachse des Gehäuses muß also so gewählt werden, daß das Handgelenk sich an seinem unteren Gelenkanschlag abstützt. Dabei hat sich ein Winkel von 60° bis 75°, vorzugsweise 68°, als besonders vorteilhaft erwiesen. Die schräge Griffanordnung hat weiterhin den Vorteil, daß, wenn kein Ansatzelement am Handgriff angeordnet ist, dennoch ein Abstellen des Handrührgerätes bei kurzzeitiger Unterbrechung möglich ist, indem das Handrührgerät zwischen dem Handgriff und dem Gehäuse am Rand eines Rührbehälters eingehängt wird. Bei besonders engen Übergängen zwischen dem Handgriff und dem Gehäuse kann sogar das Handrührgerät am Deckelrand eingeklemmt werden.

Damit der die Luft ansaugende Luftleitkanal keine Luft von dem die Warmluft abgebenden Luftleitkanal ansaugt, sind die Luftschlitze durch einen Steg voneinander getrennt am Ansatzelement ausgebildet.

Falls erforderlich, kann der Arm an seinem Übergang zum Gehäuse mit einer Erweiterung vorgesehen werden. Hierdurch kann das Handrührgerät in seinen Abmessungen viel kleiner ausgestaltet werden, als dies bei herkömmlichen Geräten der Fall ist.

Um die Handhabung des Handrührgerätes sowohl für Linkshänder als auch für Rechtshänder zu ermöglichen, ist im oberen, in den Handgriff übergehenden Teil des Ansatzelements eine Mulde zur Aufnahme und Führung eines Anschlußkabelgelenks vorgesehen, das gegenüber dem Luftleitkanal abgedichtet ist, wobei die Schwenkrichtung des Anschlußgelenks in Längsrichtung des Handgriffs erfolgt. Durch diese vorteilhafte Ausbildung kann das Handrührgerät sowohl von Links- wie auch Rechtshändern benutzt werden, da das Anschlußkabel nicht mehr seitlich am Handrührgerät angeordnet ist. Durch die schwenkbare Anordnung des Anschlußkabels kann dieses beim Abstellen des Handrührgerätes parallel zur Abstellfläche geschwenkt werden, so daß es nicht störend in die Abstellfläche eingereift. Damit die Luft nur über die Luftschlitze ein- bzw. ausströmt, ist das Anschlußkabelgelenk gegenüber dem Luftleitkanal abgedichtet. Hierdurch werden von vornherein störende Luftgeräusche und Fremdeinlässe vermieden.

Um eine Überhitzung bei noch laufendem Motor des auf der Abstellfläche bereits abgestellten Handrührgerätes zu vermeiden, erstrecken sich auch in die Seitenflächen des Ansatzelements Luftschlitze. Diese ermöglichen dann eine seitliche Abführung bzw. Zuführung der Kühlluft bei noch laufendem Gerät. Eine Ab- bzw. Zuführung der Kühlluft bei auf der Abstellfläche abgestelltem Handrührgerät ist auch dadurch gewährleistet, daß auf der Abstellfläche erhabene Fußelemente ausgebildet sind.

In einer Weiterbildung der Erfindung ist vorgesehen, daß auf der Unterseite des Arms eine quer zu den Arbeitswerkzeugen verschiebbare Zunge vorgesehen ist, mittels derer mindestens eine Einstecköffnung und die damit verbundene Aufnahmeeinrichtung verschließbar ist. Der Arm dient also nicht nur als Luftleitkanal oder als Aufnahme von Getriebeteilen, sondern ermöglicht gleichzeitig die Aufnahme einer Verschließeinrichtung für mindestens eine ein Arbeitswerkzeug aufnehmende Einstecköffnung, wenn sie nicht benötigt wird.

Um nach dem Gebrauch des Handrührgerätes das Anschlußkabel sicher und ortsfest am Gerät zu befestigen, wird in einer Weiterbildung der Erfindung vorgeschlagen, daß am radial äußeren Umfang des Ansatzelementes eine Rinne ausgebildet ist. Das Anschlußkabel kann also problemlos um die Rinne gewickelt werden, ohne daß es vom Gerät heruntergleitet und dann beim Abstellen des Handrührgerätes über seine Abstellfläche hinderlich wäre.

Im folgenden wird die Erfindung anhard der Zeichnungen näher erläutert. Es zeigen:

Fig 1      ein erstes Ausführungsbeispiel des erfindungsgemäßen Handgeräts von der Seite gesehen;

Fig. 2      ein zweites Ausführungsbeispiel des erfindungsgemäßen Handgeräts von der Seite gesehen;

Fig. 3      eine Draufsicht des Handgeräts in Richtung Z nach Fig. 2;

Fig. 4      eine Unteransicht des Handgeräts in Richtung X nach Fig. 2 und

Fig. 5      eine Rückansicht in Richtung Y nach Fig. 2.

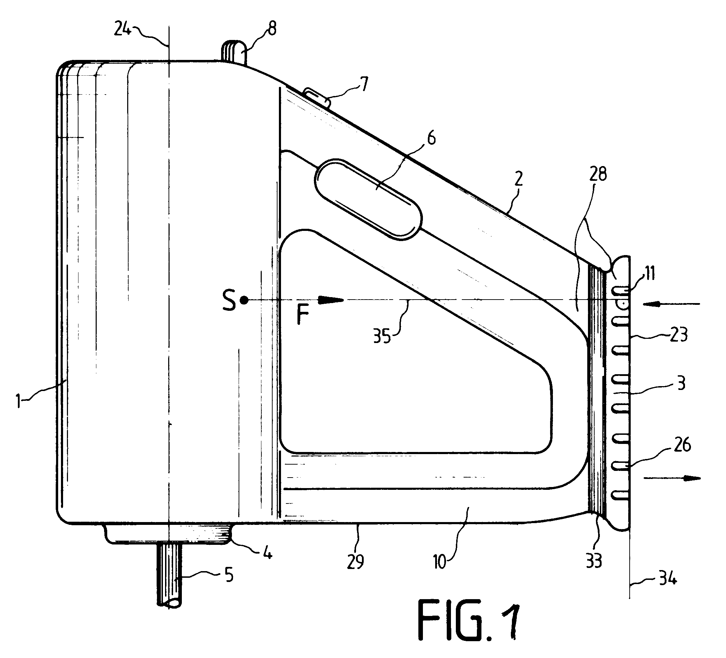

Zur Vermeidung von Wiederholungen sind in den Figuren 1 bis 6 für entsprechend gleiche Bauteile gleiche Positionsnummern gewählt.

Die Figuren 1 bis 5 zeigen das erfindungsgemäße Handrührgerät, das zum Zerkleinern, Kneten und Rühren etc. dient. Am im wesentlichen zylindrischen Gehäuse 1 mit dem darin untergebrachten Motor 19 und der Getriebeeinrichtung 20 für die verschiedenen, bei 5 angedeuteten Rühr-, Knet- und Zerkleinerungseinsätze ist ein länglicher, von einer Hand bequem umschließbarer Handgriff 2 quer zum Gehäuse 1 und schräg nach unten gerichtet angeformt.

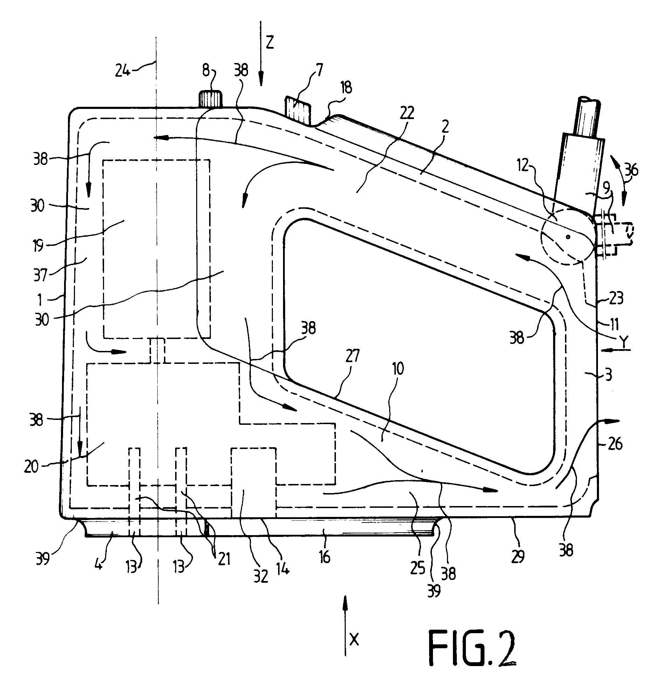

Kurz hinter dem Anformungsbereich am Übergang vom Gehäuse 1 zum Handgriff 2 sind in der gesamt abgerundeten Oberfläche des Handgriffs 2 an beiden Seiten Griffmulden 6 für Daumen und bzw. Zeigefinger ausgebildet (Fig. 2).

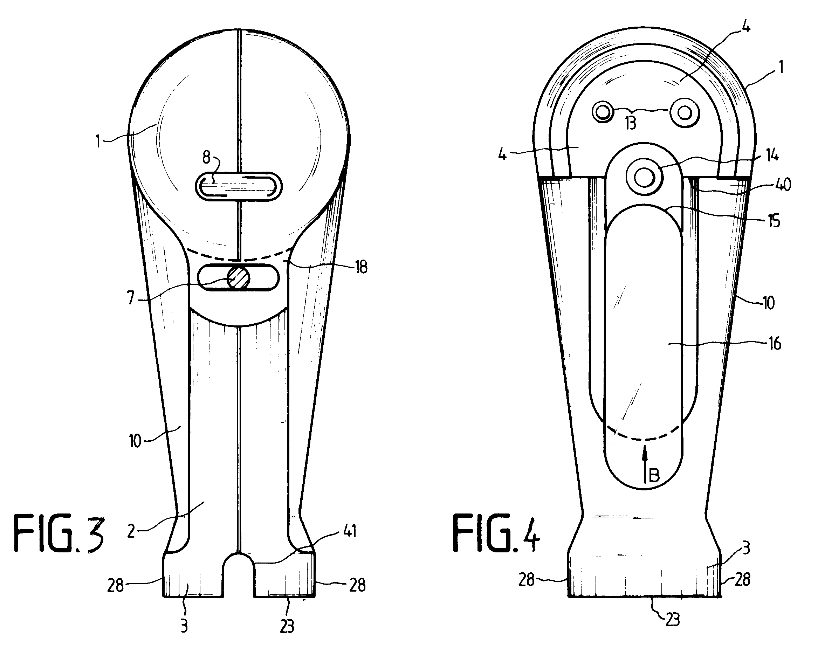

Am oberen Ende des Handgriffs 2 ist gemäß den Figuren 1 bis 5 ein quer zu dessen Längsrichtung verrückbarer Stufenschalter 7 vorgesehen. An der Oberseite des Gehäuses 1 ragt eine Auswurftaste 8 heraus, bei deren Betätigung das jeweilige Arbeitswerkzeug 5 aus seiner am Getriebe 20 angeordneten Aufnahmeeinrichtung 21 entriegelt wird und über die entsprechende Einsecköffnung 13, 14 aus dem Handrührgerät herausfällt. Die mit den Einrastmitteln (im einzelnen nicht näher dargestellt) verbundenen Einsecköffnungen 13, 14 für die verschiedenen Arbeitswerkzeuge 5 befinden sich in einem an der Gehäuseunterseite ausgebildeten, vorzugsweise eingefaßten, erhabenen Abschnitt 4. Wie aus Fig. 3 deutlich hervorgeht, verlaufen der Motor 19 und die Arbeitswerkzeuge 5 in gleicher Längsachse 24 des Gehäuses 1, so daß aufwendige Winkelgetriebe vermieden werden. Das Getriebe 20 ist zwischen Motor 19 und den Arbeitswerkzeugen 5 im Gehäuse 1 angeordnet.

Bei kurzzeitigem Ausschalten oder auch im Betrieb kann das Handrührgerät bequem und sicher mit Hilfe eines am freien Ende des Handgriffs 2 angeformten, sich parallel zur Grätekörperlängsachse 24 erstreckenden Ansatzelementes 3 über seine Abstellfläche 23 auf einem nicht dargestellten Arbeitstisch abgestellt werden. Dies ist jedoch nur dann möglich, wenn, wie beispielsweise in Fig. 1 dargestellt, die vom Schwerpunkt S des Handrührgerätes ausgehende Gewichtskraft F mit seiner Wirkungslinie 35 auf die Abstellfläche 23 fällt. Die vom Gehäusekörper 1 abgewandte Abstellfläche 23 des oben und unten abgerundeten Ansatzelements 3 ist daher in Fig. 1 als Stellfläche des Handgriffs ausgebildet und ermöglicht auch ein Aufstellen des mit Arbeitswerkzeugen 5 bestückten Handrührgerätes, ohne daß diese Arbeitswerkzeuge 5 die Arbeitsfläche des Tisches berühren, sondern sogar parallel zur Arbeitsfläche verlaufen. Die schwerpunktmäßig stabile Stellung des Handrührgerätes wird durch den schrägen Ansatz des Handgriffs 2 erleichtert.

In den Figuren 1 bis 5 ist das Handrührgerät um einen den unteren Bereich des Gehäuses 1 mit dem Ansatzelement 3 verbindenden Arm 10 erweitert. Dieser im wesentlichen senkrecht zum Gehäuse 1 und radial nach außen verlaufende Arm 10 bildet mit dem Ansatzelement 3, dem sich daran anschließenden Handgriff 2 und dem Gehäuse 1 eine homogene und stabile Kunststoffgehäuseoberfläche, wobei sich der seitlich abgerundete und oben und unten flach verlaufende Arm 10 (Fig. 1 und 2) vom Gehäusekörper 1 zum Ansatzelement 3 hin verjüngt. Der Übergangsbereich vom Gehäusekörper 1 zum Arm 10 stellt also eine Erweiterung 27 dar, um teilweise Teile vom Getriebe 20 dort zu positionieren.

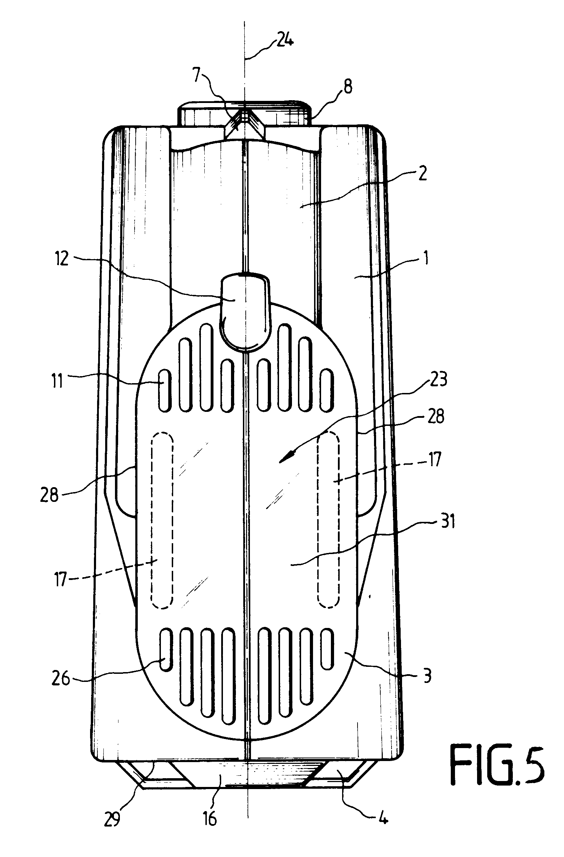

Gegenüber dem in Fig. 1 schematisch dargestellten Handrührgerät weist Das in den Figuren 1 - 5 dargestellte Handrührgerät weist aufgrund des eine geschlossene Gehäuseeinheit mit Ansatzelement 3 und Handgriff 2 herstellenden Arms eine erhöhte Stabilität auf. Die gezeigte Einheit ist als ein Kunststoffschalengehäuse aus mindestens zwei Teilen gefertigt. Als Motor 19 dient ein platzsparender Gleichstrommotor, so daß der Querschnitt und die axiale Baulänge (auch durch die Aufnahme von Getriebeteilen in der Erweiterung 27 bedingt) des Gerätekörpers 1 insgesamt erheblich verkleinert ist. In Fig. 5 sind die Luftschlitze 11, 26 durch den Steg 31 voneinander getrennt. Selbstverständlich ist es auch möglich, die Luftführung entgegen der Pfeile 38 durch das Handrührgerät zu leiten.

Die ebene und senkrecht zur Abstellfläche 23 verlaufende Unterseite 29 des Arms 10 weist eine hervorstehende und an den Abschnitt 4 bündig abschließende, längliche, erhabene Zunge 16 auf, die angenähert die gleiche Höhe wie der Abschnitt 4 aufweist und die sich in Längsrichtung des Armes 10 erstreckt (Fig. 2, 4 und 5). Die Randbereiche 39 beider Abschnitte 4, 16 sind außer im Übergangsbereich 40 der Abschnitte 4, 16 zueinander abgekantet. Im oberen Bereich gemäß Fig. 4 ist der Abschnitt 4 der Mantelfläche des Gehäuses 1 angepaßt und weist einen etwas geringeren Durchmesser als dieser auf. Dort, wo das zylindrische Gehäuse 1 in den Arm 10 übergeht, weist der Abschnitt 4 eine Abschlußkante 40 auf. An diese Abschlußkante 40 schließt sich die vordere Abschlußkante 15 der Zunge 16 an, wenn die Zunge 16 die Bohrung 14 verschließt.

Die längliche, an beiden Enden abgerundete Zunge 16 ist entgegen der Federkraft B einer nicht dargestellten Federeinrichtung verschiebbar (Fig. 4). In dieser Fig. 4 wird gerade die Offenstellung der Zunge 16 angezeigt, indem die Bohrung 14 zur Aufnahme eines nicht dargestellten Pürrierstabes von diesem freigelegt ist. Wird beispielsweise der Pürierstab bei Betätigung der Auswurftaste 8 entfernt, so schiebt sich die Zunge 16 selbsttätig durch Federkraft zurück in die erwähnte Schließstellung und verdeckt die Einsecköffnung 14, was insbesondere bei Benutzung der anderen Arbeitswerkzeuge 5 (2 Knethaken oder 2 Schlagbesen) wichtig ist, die in im vorderen, runden Bereich des Abschnitts 4 in üblicher Weise nebeneinander angeordneten Einsecköffnungen 13 eingeführt und dort über die Aufnahmeeinrichtungen 21 verriegelt werden. Die Einstecköffnungen 13 dienen also zur Aufnahme von zwei Knethaken, Schlagbesen etc. Ein Herausnehmen dieser Arbeitswerkzeuge 5 erfolgt ebenfalls, wie beim Pürierstab, über die Auswurftaste 8.

Soll das Handrührgerät auch während des Laufbetriebs auf der Rückseite 23 des Ansatzelementes 3 abstellbar sein, so können beispielsweise anstelle der Abstellfläche 23 auch die durch die gestrichelten Linien angedeuteten, als Fußelemente ausgebildeten Abstandsstege 17, die im Bereich zwischen den Luftschlitzen 11, 26 auf beiden Seiten der Stellfläche 23 verlaufen, vorgesehen werden.

Am oberen Ende der eine Ebene 34 bildenden Abstellfläche 23 ist nach Fig. 4 eine Mulde 41 oder Ausnehmung im Ansatzelement 3 und dem sich daran anschließenden Handgriff 2 vorgesehen, in welcher ein Kippgelenk 12 für ein Anschlußkabel 9 angeordnet ist. Mit Hilfe dieses Kippgelenks 12 kann das Anschlußkabel 9, das in Betrieb des Handrührgerätes aus der Abstellfläche 23 heraustreten kann (Fig. 2), zum Abstellen des Handrührgerätes auf dieser in der Mulde 41 nach oben umgelegt werden, was durch die Schwenkrichtung 36 gemäß Fig. 2 angedeutet wird.

Wie aus der Fig. 3 hervorgeht, ist im vorderen Bereich des Handgriffs 2 am Übergang in die im wesentlichen kreisförmige Oberseite des Gehäusekörpers 1 eine Einbuchtung 18 ausgebildet, aus der der Stufenschalter 7 soweit herausragt, daß seine der Schrägung des Handgriffs 2 angepaßte Oberseite in etwa mit dessen Oberseite ausgerichtet ist. Auf diese Weise ragt der Stufenschalter 7 nicht mehr störend aus dem Handgriffbereich nach oben heraus, sondern liegt in der abgerundeten Einbuchtung 18.

In den Figuren 1, 3 und 4 ist am freien Ende von Handgriff und Arm 10 im Übergangsbereich zum Ansatzelement 3 eine Rinne 33 zur Aufnahme des Anschlußkabels 9 vorgesehen, wenn das Handrührgerät nicht mehr benutzt und auf der Abstellfläche 23 abgestellt werden soll. Hierzu braucht lediglich das Kabel um die Rinne 33 herumgewickelt zu werden.

## Patentansprüche

1. Elektrisch betriebenes Handrührgerät zum Bearbeiten von Lebensmitteln, mit einem einen Motor (19), ein Getriebe (20) und eine mit dem Getriebe (20) verbundene Aufnahmeeinrichtung (21) zur Befestigung von Arbeitswerkzeugen (5) aufnehmendes Gehäuse (1), das zum Halten des Handrührgerätes und zur Kühlung des Motors (19) einen Handgriff (2) mit Luftleitkanälen (22, 25) und Luftöffnungen (11, 26) aufweist, durch die die Kühlluft von außen zum Gehäuse (1) hin- oder vom Gehäuse (1) weggeführt wird, wobei der Motor (19), das Getriebe (20) und das Arbeitswerkzeug (5) in Längsrichtung (24) des Gehäuses (1) hintereinander angeordnet sind, wobei Motor (19) und Arbeitswerkzeug (5) in gleicher Längsrichtung (24) verlaufen, wobei der Handgriff (2) quer zur Längsachse (24) des Gehäuses (1) verläuft und wobei der Handgriff (2) an dem dem Arbeitswerkzeug (5) entgegengesetzten, oberen Bereich des Gehäuses (1) ausgebildet ist, **dadurch gekennzeichnet,** daß an dem dem Arbeitswerkzeug (5) näheren, unteren Bereich des Gehäuses (1) ein sich ebenfalls in gleicher Richtung wie der Handgriff (2) quer zur Längsachse (24) des Gehäuses (1) erstreckender Arm (10) vorgesehen ist und daß der Arm (10) zur Kühlung des Motors (19) mit einem weiteren Luftleitkanal (25) und einer am freien Ende ausgebildeten Luftöffnung (26) versehen ist, in der Kühlluft vom Gehäuse (1) weg- oder zum Gehäuse (1) hingeführt wird.

2. Handrührgerät nach Anspruch 1, **dadurch gekennzeichnet,** daß das freie Ende des Handgriffs (2) und des Arms (10) über ein sich im wesentlichen parallel zur Längsachse (24) des Gehäuses (1) und des Arbeitswerkzeuges (5) erstreckendes Ansatzelement (3) miteinander verbunden sind und daß an dem Ansatzelement (3) auf der dem Gehäuse (1) abgewandten Seite (23) die Luftschlitze (11, 16) sowohl für den Ein- als auch für den Austritt der Luft von den Luftleitkanälen (22, 25) ausgebildet sind.

3. Handrührgerät nach Anspruch 2, **dadurch gekennzeichnet,** daß die abgewandte Seite (23) des Ansatzelements (3) zusätzlich als Abstellfläche für das Handrührgerät ausgebildet ist.

4. Handrührgerät nach Anspruch 3, **dadurch gekennzeichnet,** daß der Handgriff (2) schräg nach unten gerichtet ist.

5. Handrührgerät nach Anspruch 4, **dadurch gekennzeichnet,** daß der Handgriff (2) unter einem Winkel (b) von 60° bis 75° gegenüber der Längsachse (24) des Gehäuses (1) schräg nach unten in Richtung der Arbeitswerkzeuge (5) verläuft.

6. Handrührgerät nach Anspruch 1, **dadurch gekennzeichnet,** daß der Luftleitkanal (22) als Lufteinlaß und der weitere Luftleitkanal (25) als Luftauslaß dient.

7. Handrührgerät nach Anspruch 2,
   **dadurch gekennzeichnet,**
   daß die Luftschlitze (11, 26) durch einen Steg (31) voneinander getrennt am Ansatzelement (3) ausgebildet sind.

8. Handrührgerät nach Anspruch 1,
   **dadurch gekennzeichnet,**
   daß der Arm (10) an seinem Übergang zum Gehäuse (1) eine Erweiterung (27) aufweist.

9. Handrührgerät nach Anspruch 1,
   **dadurch gekennzeichnet,**
   daß im oberen, in den Handgriff (2) übergehenden Teil des Ansatzelements (3) eine Mulde zur Aufnahme und Führung eines Anschlußkabelgelenks (12) vorgesehen ist, das gegenüber dem Luftleitkanal (22) abgedichtet ist und daß die Schwenkrichtung (36) des Anschlußkabelgelenks (12) in Längsrichtung des Handgriffs (2) erfolgt.

10. Handrührgerät nach Anspruch 2,
    **dadurch gekennzeichnet,**
    daß sich die Luftschlitze (11, 26) auch in die Seitenflächen (28) des Ansatzelements (3) erstrecken.

11. Handrührgerät nach Anspruch 2,
    **dadurch gekennzeichnet,**
    daß auf der Abstellfläche (23) erhabene Fußelemente (17) ausgebildet sind.

12. Handrührgerät nach Anspruch 2,
    **dadurch gekennzeichnet,**
    daß auf der Unterseite (29) des Arms (10) eine quer zu den Arbeitswerkzeugen (5) verschiebbare Zunge (16) vorgesehen ist, mittels derer mindestens eine Einstecköffnung (14) und die damit verbundene Aufnahmeeinrichtung (21) verschließbar ist.

13. Handrührgerät nach Anspruch 2,
    **dadurch gekennzeichnet,**
    daß am radial äußeren Umfang des Ansatzelementes (3) eine Rinne (33) ausgebildet ist.

**Claims**

1. An electrically powered portable mixer for processing food, including a housing (1) which accommodates a motor (19), a gear box (20) and a receptacle means (21) connected to the gear box (20) for the fastening of processing tools (5), and which for holding the portable mixer and for cooling the motor (19) is provided with a handle (2) having air ducts (22, 25) and air vents (11, 26) directing the cooling air towards the housing (1) from the outside or away from the housing (1), with the motor (19), the gearbox (20) and the processing tool (5) being arranged in succession in the longitudinal direction (24) of the housing (1), with the motor (19) and the processing tool (5) extending in the same longitudinal direction (24), and with the handle (2) extending transversely to the longitudinal axis (24) of the housing (1) and being provided in the upper area of the housing (1) opposite the processing tool (5), **characterized in that** an arm (10) extending in the same direction as the handle (2) transversely to the longitudinal axis (24) of the housing (1) is provided in the lower area of the housing (1) more proximate to the processing tool (5), and that said arm (10), for cooling the motor (19), is provided with a further air duct (25) and with an air vent (26) formed at the free end, in which vent cooling air is directed away from the housing (1) or towards the housing (1).

2. The portable mixer as claimed in claim 1, **characterized in that** the respective free ends of the handle (2) and of the arm (10) are connected to each other by an extension (3) extending substantially parallel to the longitudinal axis (24) of the housing (1) and the processing tool (5), and that the air vents (11, 16) for both the entry and the exit of air from the air ducts (22, 25) are provided on the side (23) of the extension (3) remote from the housing (1).

3. The portable mixer as claimed in claim 2, **characterized in that** the side (23) of the extension (3) remote from the housing is additionally constructed as a rest for the portable mixer.

4. The portable mixer as claimed in claim 3, **characterized in that** the handle (2) extends downwardly at an angle.

5. The portable mixer as claimed in claim 4, **characterized in that** the handle (2) extends downwardly in the direction of the processing tools (5) at an angle (b) of between 60° and 75° relative to the longitudinal axis (24) of the housing (1).

6. The portable mixer as claimed in claim 1, **characterized in that** the air duct (22) serves as an air inlet and the further air duct (25) as an air outlet.

7.  The portable mixer as claimed in claim 2, **characterized in that** the air vents (11, 26) formed on the extension (3) are separated from each other by a web member (31).

8.  The portable mixer as claimed in claim 1, **characterized in that** the arm (10) is provided with an enlargement (27) in the area proximate to the housing (1).

9.  The portable mixer as claimed in claim 1, **characterized in that** a cavity for receiving and guiding a joint (12) of a power cord is provided in the upper part of the extension (3) adjacent to the handle (2), said joint being sealed against the air duct (22), and that the swivel direction (36) of the joint (12) of the power cord is in the longitudinal direction of the handle (2).

10. The portable mixer as claimed in claim 2, **characterized in that** the air vents (11, 26) extend also into the sides (28) of the extension (3).

11. The portable mixer as claimed in claim 2, **characterized in that** raised foot elements (17) are provided on the rest (23).

12. The portable mixer as claimed in claim 2, **characterized in that** a tongue (16) slidable transversely to the processing tools (5) is provided on the underside (29) of the arm (10), said tongue being adapted to close at least one socket (14) and the associated receptacle means (21).

13. The portable mixer as claimed in claim 2, **characterized in that** a channel (33) is formed on the radial outer circumference of the extension (3).

**Revendications**

1.  Batteur à main à entraînement électrique destiné à la préparation de denrées alimentaires, comportant un carter (1) qui renferme un moteur (19), une transmission (20) et un dispositif de réception (21) relié à la transmission (20) et destiné à la fixation d'outils de travail (5), et qui présente pour le maintien du batteur et pour le refroidissement du moteur (19), une poignée (2) comportant des canaux de guidage d'air (22, 25) et des ouvertures d'air (11, 26), par lesquelles l'air de refroidissement est amené de l'extérieur au carter (1) ou est évacué du carter (1), le moteur (19), la transmission (20) et l'outil de travail (5) étant disposés en se succédant dans la direction longitudinale (24) du carter (1), le moteur (19) et l'outil de travail (5) s'étendant dans la même direction longitudinale (5), la poignée (2) s'étendant transversalement à l'axe longitudinal (24) du carter (1), et la poignée (2) étant formée au niveau de l'extrémité supérieure du carter (1), opposée à celle de l'outil de travail (5), caractérisé en ce que dans la zone inférieure du carter (1), plus proche de l'outil de travail (5), est prévu un bras (10) s'étendant également dans la même direction que la poignée (2), transversalement à l'axe longitudinal (24) du carter (1), et en ce que le bras (10) est pourvu, en vue du refroidissement du moteur (19), d'un autre canal de guidage d'air (25) et d'une ouverture d'air (26) réalisée à l'extrémité libre et par laquelle de l'air de refroidissement est évacué du carter (1) ou amené au carter (1).

2.  Batteur à main selon la revendication 1, caractérisé en ce que les extrémités libres de la poignée (2) et du bras (10) sont reliées entre-elles par l'intermédiaire d'un élément d'embase (3) s'étendant sensiblement de manière parallèle à l'axe longitudinal (24) du carter (1) et de l'outil de travail (5), et en ce que sur l'élément d'embase (3), sur le côté (23) éloigné de celui du carter (1), sont réalisées les fentes d'air (11, 16) destinées aussi bien à l'entrée d'air qu'à la sortie de l'air des canaux de guidage d'air (22, 25).

3.  Batteur à main selon la revendication 2, caractérisé en ce que le côté (23) éloigné du carter, de l'élément d'embase (3), est en plus réalisé sous la forme d'une surface d'appui permettant de poser le batteur à main.

4.  Batteur à main selon la revendication 3, caractérisé en ce que la poignée (2) est orientée de manière inclinée vers le bas.

5.  Batteur à main selon la revendication 4, caractérisé en ce que la poignée (2) s'étend de manière inclinée vers le bas, en direction des outils de travail (5), en formant un angle (b) de 60° à 75° par rapport à l'axe longitudinal (24) du carter (1).

6.  Batteur à main selon la revendication 1, caractérisé en ce que le canal de guidage d'air (22) fait office d'entrée d'air et l'autre canal de guidage d'air (25) fait office de sortie d'air.

7. Batteur à main selon la revendication 2, caractérisé
   en ce que les fentes d'air (11, 26) sont réalisées sur l'élément d'embase (3) en étant séparées entre-elles par une nervure (31).

8. Batteur à main selon la revendication 1, caractérisé
   en ce que le bras (10) présente un évasement (27), au niveau de son raccordement au carter (1).

9. Batteur à main selon la revendication 1, caractérisé
   en ce que dans la partie supérieure de l'élément d'embase (3), se raccordant à la poignée (2), est prévue une cavité destinée à recevoir et à guider une articulation de câble de raccordement (12), qui est rendue étanche par rapport au canal de guidage d'air (22), et en ce que la direction de pivotement (36) de l'articulation de câble de raccordement (12) se situe dans la direction longitudinale de la poignée (2).

10. Batteur à main selon la revendication 2, caractérisé
    en ce que les fentes d'air (11, 26) s'étendent également dans les faces latérales (28) de l'élément d'embase (3).

11. Batteur à main selon la revendication 2, caractérisé
    en ce que sur la surface d'appui (23) permettant de poser le batteur, sont réalisés des éléments formant pieds (17) en relief.

12. Batteur à main selon la revendication 2, caractérisé
    en ce que sur le côté inférieur (29) du bras (10), est prévue une languette (16) pouvant coulisser transversalement aux outils de travail (5), et à l'aide de laquelle il est possible d'obturer au moins une ouverture d'introduction (14) et le dispositif de réception (21) qui y est relié.

13. Batteur à main selon la revendication 2, caractérisé
    en ce que sur la périphérie radialement extérieure de l'élément d'embase (3), est réalisée une gorge (33).

FIG. 1

EP 0 341 410 B1

FIG.2

FIG.3

FIG.4

EP 0 341 410 B1

FIG.5